# EUROPEAN PATENT APPLICATION

(11) **EP 4 549 863 A1**
(43) Date of publication of application: **07.05.2025**
(21) Application number: 24196836.1
(22) Date of filing: 27.08.2024
(51) Int. Cl.: F27B 5/04, F27B 9/26, F27B 17/00, F27D 11/12, H05B 6/64, F27D 99/00

(54) **MICROWAVE FIRING APPARATUS**

(30) Priority: 31.10.2023 KR 20230147505
(71) Applicant: ECOPRO BM CO., LTD., Cheongju-si, Chungcheongbuk-do 28117 (KR); EcoProHN Co. Ltd., Cheongju-si, Chungcheongbuk-do 28116 (KR)
(72) Inventor: LEE, Chong Min, 28116 Cheongju-si, Chungcheongbuk-do (KR); LEE, Dongwook, 28116 Cheongju-si, Chungcheongbuk-do (KR); JEON, Minyeong, 28116 Cheongju-si, Chungcheongbuk-do (KR); CHAE, Taesung, 28116 Cheongju-si, Chungcheongbuk-do (KR); JANG, Hyunseok, 28116 Cheongju-si, Chungcheongbuk-do (KR); SHIN, Baekkyoung, 28116 Cheongju-si, Chungcheongbuk-do (KR)
(74) Representative: Beck & Rössig European Patent Attorneys

(57) **Abstract**

The present invention provides a microwave firing apparatus including: a firing main body; a slide reaction unit located in the firing main body and configured to perform a biaxial reciprocating linear motion along two axes, namely an X-axis and a Y-axis, orthogonal to each other in a horizontal direction; and a plurality of microwave generators located on an upper surface of the firing main body, and in which individual microwave generators are arranged in parallel to the biaxial linear motion direction of the slide reaction unit.

## Description

### BACKGROUND

### 1. Field of the Invention

The present invention relates to a microwave firing apparatus for heating and processing powder raw materials by using microwaves for producing composite nanomaterials.

### 2. Discussion of Related Art

Lithium-ion secondary batteries are the best batteries among currently commercialized secondary batteries, and accordingly, the demand therefor in cell phones, laptops, personal computers (PCs), power tools, automobiles, and the like is expanding.

Secondary batteries have a principle of using energy generated when electrons move from a negative electrode to a positive electrode during discharging to generate power, and one material that is important for them is an electrode material. Specifically, stable carbon-based materials such as natural graphite, artificial graphite, and the like are used as conventional negative electrode materials, but a low theoretical capacity (372 mAh/g) and a low output property appear as problems.

A silicon-based negative electrode material which is an alternative to a carbon-based negative electrode material has a theoretical capacity of 10 times that of graphite, but when lithium ions are adsorbed and desorbed, there is a problem in that volume expansion is large (300 to 400%) and a crystal structure is unstable, thereby not only causing damage to an electrode plate but also causing a sharp decrease in capacity. Accordingly, rather than applying silicon-based materials alone, research on a silicon-carbon composite in which silicon nanoparticles are formed on a graphite surface is being actively conducted.

For example, in the case of a silicon-carbon composite manufacturing method of forming silicon nanoparticles on a carbon surface using microwaves, silicon has a melting point of 1414 °C, and when melted, exhibits a phenomenon in which density increases more than a solid state like water, and graphite (a carbon-based material) exhibits a property of rapidly generating heat when π electrons which are present in a structure are alternately induced into a negative electrode (-) and a positive electrode (+) using microwaves (with a wavelength of 1 m to 1 mm and a frequency of 300 MHz to 300 GHz). By applying this phenomenon, silicon with a lower melting point compared to graphite can be melt-processed on a graphite surface, and silicon nanomaterials (a composite of graphite with nano-silicon) with an increased specific surface area can be manufactured on the graphite surface by rapidly increasing the entropy due to rapid energy transfer.

Since the silicon-carbon composite manufacturing method using microwaves is a method of directly transferring energy to a carbon surface, and is efficient in time and energy compared to conventional heating methods, there is an advantage in that a manufacturing time and costs can be reduced. However, since the energy is transferred to only a portion to which the microwaves are radiated, there is a problem of difficulty in forming silicon nanoparticles uniformly on an entire surface of carbon (graphite). In this case, it is difficult to sufficiently suppress volume expansion of the silicon nanoparticles with graphite particles during adsorption and desorption of lithium ions.
(Patent Document 0001) Application Patent KR 10-2491342 B1
(Patent Document 0002) Application Patent US 6533907 B2

### SUMMARY OF THE INVENTION

The present disclosure is directed to solving the above-described problems, and to providing a microwave firing apparatus capable of uniformly forming silicon nanoparticles on a surface of a carbon-based material by causing a uniform temperature increase on the entire surface of the carbon-based material (a heating element) through microwaves.

Further, the present disclosure is directed to providing a microwave firing apparatus capable of mass-producing silicon-carbon composite negative electrode materials by causing an entirely uniform temperature increase on a plurality of carbon heating element particles charged into a large-area reaction unit while maintaining the radiation efficiency of microwaves.

One embodiment of present disclosure provides a microwave firing apparatus including: a firing main body; a slide reaction unit located in the firing main body and configured to perform a biaxial reciprocating linear motion along two axes (an X-axis and a Y-axis) orthogonal to each other in a horizontal direction; and a plurality of microwave generators located on an upper surface of the firing main body, and in which individual microwave generators are arranged in parallel in a biaxial linear motion direction of the slide reaction unit.

The slide reaction unit may include a plurality of reaction vessels in which individual reaction vessels are arranged in parallel in a biaxial reciprocating linear motion direction of the slide reaction unit.

The individual reaction vessel may receive powder raw materials including carbon-based particles and silicon-based particles in an internal accommodation space, may be aligned in a vertical direction (Z-axis) with the individual microwave generator so that the powder raw materials charged into the individual reaction vessel are irradiated with microwaves, and may precipitate the silicon-based particles on the carbon-based particle surfaces heated by the radiated microwaves.

The plurality of reaction vessels may include first to fourth reaction vessels, and the individual reaction vessel may be provided with a powder raw material accommodation space therein, and include a separator shielded from a neighboring individual reaction vessel in a disposition direction of the first to fourth reaction vessels.

The individual reaction vessel may include a plurality of auxiliary vessels in which individual auxiliary vessels are arranged in parallel in the biaxial reciprocating linear motion direction of the slide reaction unit

The individual auxiliary vessel may be aligned in a vertical direction (a Z-axis) with the individual microwave generator so that the powder raw materials charged into the individual reaction vessel are irradiated with microwaves, may melt the silicon-based particles on the carbon-based particle surfaces heated by the radiated microwaves, may be released from vertical alignment with the individual microwave generator by the biaxial reciprocating linear motion of the slide reaction unit, and may cool the powder raw material in the individual auxiliary vessel to room temperature to precipitate the silicon-based nanoparticles on the carbon-based particle surfaces.

The plurality of auxiliary vessels may include first to fourth auxiliary vessels, and the individual auxiliary vessel may be provided with a powder raw material accommodation space therein and include a separator shielded from a neighboring individual auxiliary vessel in a disposition direction of the first to fourth auxiliary vessels.

The separator may include an insulating material, a microwave reflective material, or a combination thereof.

When the individual microwave generators are aligned in the vertical direction (the Z-axis) with the first auxiliary vessel by the biaxial reciprocating linear motion of the slide reaction unit, the individual microwave generator may radiate microwaves to the first auxiliary vessel to melt silicon-based particles on carbon-based particle surfaces among powder raw materials, and each of the second to fourth auxiliary vessels may independently cool the internal powder raw materials fired by the microwaves to room temperature to precipitate silicon-based nanoparticles on the carbon-based particle surfaces or be in a reaction standby state before the microwaves are radiated.

The plurality of microwave generators may include first to fourth microwave generators, and the first to fourth microwave generator may be respectively aligned in the vertical direction (the Z-axis) with the first to fourth reaction vessels to radiate microwaves in the vertical direction.

The individual microwave generator may include a microwave generation device configured to radiate microwaves and further include a waveguide configured to guide the radiated microwaves in a vertical direction toward the slide reaction unit.

The firing main body may further include a gas inlet unit and a gas outlet unit connected to the firing main body and configured to allow a gas to move.

The gas may be air, oxygen, an inert gas, or a combination thereof.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic diagram of a microwave firing apparatus according to the present disclosure;

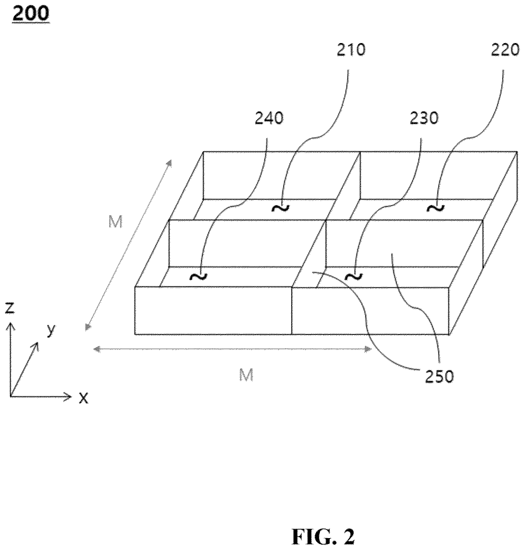

FIGS. 2 and 3 are schematic diagrams of a slide reaction unit of the microwave firing apparatus according to the present disclosure;
FIG. 4 is a schematic diagram illustrating an operating method of the microwave firing apparatus in FIG. 1; and
FIG. 5 is a scanning electron microscope (SEM) image of a silicon carbon composite (Si/C composite) synthesized in Example 1.

### DETAILED DESCRIPTION OF EXEMPLARY EMBODIMENTS

Advantages and features of the present disclosure, and methods of achieving them will become apparent with reference to preferable embodiments, which are described in detail, in conjunction with the accompanying drawings. However, the present specification is not limited to the embodiments to be described below and may be implemented in different forms, the embodiments are only provided to completely disclose the present disclosure and completely convey the scope of the present disclosure to those skilled in the art, and the present disclosure is defined by the disclosed claims.

Unless otherwise defined, all terms (including technical and scientific terms) used in the present specification may be used with meanings which may be understood in common by those skilled in the art.

In the present specification, a case in which a part "includes" a certain component is a case in which other components may be further included, rather than excluding other components, unless otherwise disclosed. Further, a singular form also includes a plural form unless otherwise mentioned in the context. In addition, a case where a component such as an apparatus, a layer, a film, a region, a part, a member, a plate, or the like is located "on" or "above" another component includes a case where there is still another composed therebetween in addition to a case of "directly on" another component.

In the present specification, reaction vessels are classified into a first reaction vessel, a second reaction vessel, a third reaction vessel, and a fourth reaction vessel, auxiliary vessels are classified into a first auxiliary vessel, a second auxiliary vessel, a third auxiliary vessel, and a fourth auxiliary vessel, and microwave generators are classified into a first microwave generator, a second microwave generator, a third microwave generator, and a fourth microwave generator, but the present specification is not limited thereto.

In the present specification, a distance between individual reaction vessels, a distance between individual auxiliary vessels, and a distance between individual microwave generators are separation distances in a horizontal direction, and a separation distance is a distance between centers of objects based on the horizontal direction.

One embodiment of the present disclosure provides a microwave firing apparatus. The firing apparatus is an apparatus for melting and then precipitating silicon particles on carbon-based particle surfaces to synthesize negative electrode material Si/C composite particles for a secondary battery in which the silicon particles are uniformly impregnated on the carbon-based particle surfaces in the form of nanoparticles.

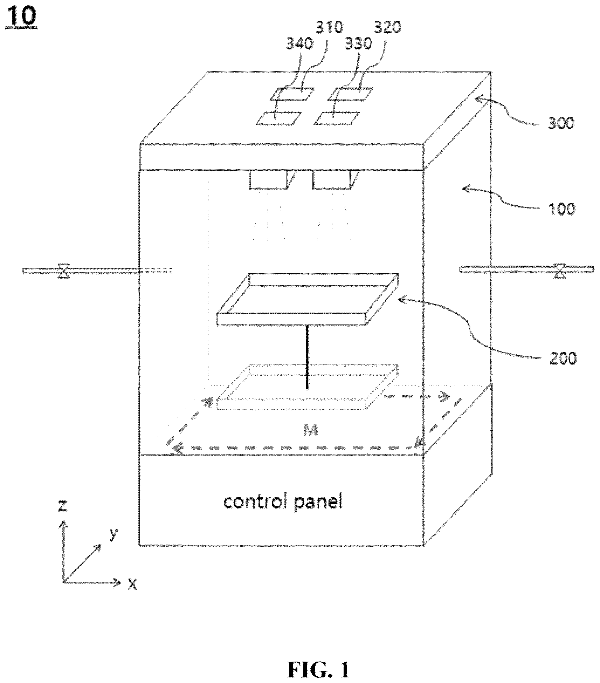

FIG. 1 is a schematic diagram of a microwave firing apparatus according to the present disclosure. Referring to FIG. 1, a microwave firing apparatus 10 includes a firing main body 100, a slide reaction unit 200, a plurality of microwave generators 300, a gas inlet unit (not shown), and a gas outlet unit (not shown).

As the firing main body 100 provides an inner space and a case where individual apparatuses constituting the microwave firing apparatus 10 of the present disclosure may be located, the slide reaction unit 200, the plurality of microwave generators 300, and the like are disposed around the firing main body 100, and the detailed apparatuses are connected . Further, the firing main body 100 serves to prevent leakage of microwaves radiated by the plurality of microwave generators 300 and concentrate the microwaves on the slide reaction unit 200. In addition, in the firing main body 100, a powder raw material inlet unit/outlet unit, a gas inlet unit/outlet unit, and the like may be further disposed, and a temperature sensor, a pressure sensor, a flow sensor, a control valve, and the like connected to the firing main body 100 may be connected to a controller (a control panel). The configurations of other apparatuses such as a raw material input/output opening and closing apparatus, a gas input/output opening and closing apparatus, a slide reaction unit driving apparatus, a microwave generation apparatus, and the like which operate according to a control signal may also be disposed in the firing main body 100 and connected to the controller.

The firing main body 100 is formed with an inner space in which the slide reaction unit 200 is disposed to perform a biaxial reciprocating linear motion along two axes (an X-axis and a Y-axis) orthogonal to each other in a horizontal direction. For example, the firing main body 100 may have a structure in which all of a left side surface, a right side surface, an upper surface (a plane), a lower surface (a bottom surface), a front surface (a front), and a rear surface (a back surface) are closed. Further, in the present disclosure, formation of a gate (an opening and closing apparatus) on one surface of the firing main body 100 is not excluded.

The slide reaction unit 200 is located in the firing main body 100 and is characterized in that it performs the biaxial reciprocating linear motion along the two axes (the X-axis and the Y-axis) orthogonal to each other in the horizontal direction. The slide reaction unit 200 may include a plurality of reaction vessels in which individual reaction vessels are arranged in parallel in a biaxial reciprocating linear motion direction of the slide reaction unit 200. The plurality of reaction vessels may specifically include first to fourth reaction vessels 210, 220, 230, and 240. Here, the first to fourth reaction vessels 210, 220, 230, and 240 may be sequentially arranged in a clockwise direction according to the biaxial reciprocating linear motion direction of the slide reaction unit 200, but are not limited thereto. Specifically, when the slide reaction unit 200 performs the biaxial reciprocating linear motion along the two axes (the X-axis and the Y-axis) orthogonal to each other in the horizontal direction, individual microwave generators 310, 320, 330, and 340 maintain an aligned state in a vertical direction (a Z-axis) along boundaries (in the horizontal direction) of the first to fourth reaction vessels 210, 220, 230, and 240, and do not deviate from the boundaries of the corresponding individual reaction vessels.

Meanwhile, the plurality of reaction vessels 210, 220, 230, and 240 may be provided so that a distance between the individual reaction vessels is the same as distances between the individual microwave generators 310, 320, 330, and 340. Further, the plurality of reaction vessels 210, 220, 230, and 240 may be provided in the same number as the individual microwave generators constituting the plurality of microwave generators 300. Accordingly, as the individual microwave generators 310, 320, 330, and 340 are aligned for the individual reaction vessels 210, 220, 230, and 240, an entirely uniform temperature increase on carbon-based particles (heating elements) among the powder raw materials accommodated in each reaction vessel may be performed, and at the same time, silicon-carbon composite negative electrode materials may be mass-produced.

The individual reaction vessels 210, 220, 230, and 240 may receive the powder raw materials including carbon-based particles and silicon-based particles in internal accommodation spaces, may be aligned in a vertical direction (the Z-axis) with the individual microwave generators 310, 320, 330, and 340 so that the powder raw materials charged into the individual reaction vessels are irradiated with microwaves, and may be impregnated the silicon-based particles of the carbon-based particle surfaces heated by the radiated microwaves.

The first to fourth reaction vessels 210, 220, 230, and 240 may be respectively aligned in the vertical direction (the Z-axis) with the individual microwave generators 310, 320, 330, and 340 to be irradiated with the microwaves from the individual microwave generators 310, 320, 330, and 340 in the vertical direction.

The individual reaction vessels 210, 220, 230, and 240 may be provided with powder raw material accommodation spaces therein, and include separators 250 shielding it from neighboring individual auxiliary vessels in a disposition direction of the individual reaction vessels 210, 220, 230, and 240. The separator 250 may include an insulating material, a microwave reflective material, or a combination thereof. The insulating material, microwave reflective material, or combination thereof may be at least one selected from the group consisting of carbon steel, heavy chromium steel, stainless (SUS) steel, ferrite-based steel, austenite steel, and martensite-based steel.

Accordingly, heat transfer and microwave leakage to an adjacent reaction vessel caused by the powder raw materials heated by microwave radiation may be prevented. When the separator is not provided between the reaction vessels, silicon carbide by-products may be synthesized as a result of heat transfer to the adjacent reaction vessel and reheating or an excessive firing reaction caused by the microwave leakage. Alternatively, when the separator is formed of only a microwave-absorbing material among microwave-impermeable materials (shielding materials), since the microwave leakage to the adjacent reaction vessel may be prevented, but the radiated microwaves may heat the separator, the heat transfer to the adjacent reaction vessel may be performed. Alternatively, when the separator is formed of only a microwave-permeable insulating material, the heat transfer to the adjacent reaction vessel may be prevented, but reheating or an excessive firing reaction caused by the microwave leakage may be partially performed.

The individual reaction vessels 210, 220, 230, and 240 may include a plurality of auxiliary vessels in which the individual auxiliary vessels are arranged in parallel in the biaxial reciprocating linear motion direction of the slide reaction unit 200. The plurality of auxiliary vessels may include first to fourth auxiliary vessels 211, 212, 213, and 214, 221, 222, 223, and 224, 231, 232, 233, and 234, and 241, 242, 243, and 244. Here, the first to fourth auxiliary vessels may be sequentially arranged in a clockwise direction according to the biaxial reciprocating linear motion direction of the slide reaction unit 200 like the first to fourth reaction vessels, but are not limited thereto. Specifically, the slide reaction unit 200 performs the biaxial reciprocating linear motion along the two axes (the X-axis and the Y-axis) orthogonal to each other in the horizontal direction, specifically, performs the biaxial reciprocating linear motion in a clockwise order to align the individual microwave generators 310, 320, 330, and 340 in the vertical direction (the Z-axis) with the first to fourth reaction vessels in that order, but present disclosure is not limited thereto.

The individual auxiliary vessels may be aligned in the vertical direction (the Z-axis) with the individual microwave generators 310, 320, 330, and 340 so that the powder raw materials charged into the inside are irradiated with microwaves, may melt the silicon-based particles on the carbon-based particle surfaces heated by the radiated microwaves, may be released from vertical alignment with the individual microwave generators 310, 320, 330, and 340 by the biaxial reciprocating linear motion of the slide reaction unit 200, and may cool the powder raw material in the individual auxiliary vessel to room temperature to precipitate the silicon-based nanoparticles on the carbon-based particle surfaces.

In the first to fourth auxiliary vessels 211, 212, 213, and 214, depending on a biaxial reciprocating linear motion state of the slide reaction unit 200, an arbitrary individual auxiliary vessel may be aligned in the vertical direction (the Z-axis) with the individual microwave generator 310 to be irradiated with the microwaves from each individual microwave generator in the vertical direction, and the remaining auxiliary vessels are not aligned in the vertical direction (the Z-axis) with the individual microwave generator 310 and thus may not be irradiated with the microwaves in the vertical direction.

The individual auxiliary vessel may be provided with a powder raw material accommodation space therein, and include a separator 255 shielding it from a neighboring individual auxiliary vessel in a disposition direction of the first to fourth auxiliary vessels 211, 212, 213, and 214. Here, the separator 255 is the same as described above.

Accordingly, when a microwave firing reaction is performed in the individual auxiliary vessels aligned in the vertical direction (the Z-axis) with the individual microwave generators 310, 320, 330, and 340, since a room temperature cooling process may be performed in the remaining individual auxiliary vessels which are not aligned when a firing reaction of internal powder raw materials is completed in advance, process efficiency may be increased. Further, as described above, the heat transfer and the microwave leakage to the adjacent reaction vessel due to the powder raw materials heated by the radiated microwaves may be prevented.

Meanwhile, although the first to fourth auxiliary vessels have been described using the first to fourth auxiliary vessels 211, 212, 213, and 214 in the first reaction vessel and the first microwave generator 310 as examples, the same may apply to the first to fourth auxiliary vessels 221, 222, 223, and 224 in the second reaction vessel 220 and the second microwave generator 320, the first to fourth auxiliary vessels 231, 232, 233, and 234 in the third reaction vessel 230 and the third microwave generator 330, and the first to fourth auxiliary vessels 241, 242, 243, and 244 in the fourth reaction vessel 240 and the fourth microwave generator 340.

The slide reaction unit 200 may further include a support member (not shown) which supports the plurality of reaction vessels 210, 220, 230, and 240, a first guide member (not shown) which is connected to the support member and guides movement of the slide reaction unit 200 in a horizontal direction (the X-Y axes), a second guide member (not shown) which guides the movement of the slide reaction unit 200 in the vertical direction, and a driving apparatus (not shown) providing power.

The support member is intended to stably support the reaction unit thereon and may be formed in a plate shape, but is not limited thereto. The first and second guide members may include rails, conveyor belts, a plurality of gears, cylinders, and the like to cause the slide reaction unit 200 to perform the biaxial reciprocating linear motion in the horizontal direction (the X-Y axes) and the vertical direction (the Z axis), but are not limited thereto. The driving apparatus may include at least one selected from the group consisting of an electric motor, a servomotor, a hydraulic motor, a pneumatic motor, and a reducer as a horizontal (X-Y axis) driving apparatus, and include an electric actuator, a hydraulic actuator, a pneumatic actuator, or the like as a vertical (Z-axis) driving apparatus, but is not limited thereto.

The plurality of microwave generators 300 are intended to self-heat a surface temperature of the carbon-based material among the powdered raw materials charged into the slide reaction unit 200 to about 1,400 °C to composite (coat) silicon nanoparticles on a carbon surface.

The plurality of microwave generators 300 are located on an upper surface of the firing main body 100 and include the individual microwave generators 310, 320, 330, and 340 arranged (fixed) in parallel in the biaxial linear motion direction of the slide reaction unit 200. Since the plurality of microwave generators 300 are fixed to a specific position on the upper surface of the firing main body 100, the microwaves may be stably radiated in the vertical direction. Since the microwave radiation efficiency of a microwave generation apparatus (magnetron) is sensitive to the phase stability of the microwaves, and the phase stability is affected by noise of the magnetron, it may be preferable to fix the magnetron at a certain position and move the reaction unit and a moving unit to reduce the noise. According to the present disclosure, even when a volume of the reaction unit is increased, since an entirely uniform temperature increase may be performed on carbon (heating elements) charged into a large-area reaction unit while maintaining radiation efficiency of the microwaves, silicon-carbon composite negative electrode materials may be mass-produced.

The plurality of microwave generators 300 may include the first to fourth microwave generators 310, 320, 330, and 340, and the first to fourth microwave generators 310, 320, 330, and 340 may be respectively aligned in the vertical direction (the Z-axis) with the first to fourth reaction vessels 210, 220, 230, and 240 to radiate the microwaves in the vertical direction, but are not limited thereto.

The individual microwave generators 310, 320, 330, and 340 may include microwave generation devices which radiate microwaves and further include waveguides (not shown) which guide the radiated microwaves in the vertical direction toward the slide reaction unit 200.

The microwave generation devices may be a plurality of magnetrons, klystrons, and gyrotrons which generate high-output microwaves of 1 to 3 kW or 3 kW, and preferably, may be magnetrons. Here, the plurality of microwave generation devices (not shown) may be provided on the upper surface of the firing main body 100 along the two axes (the X-axis and the Y-axis) orthogonal to each other in the horizontal direction. Meanwhile, a microwave is an electromagnetic ray with a wavelength of about 1 cm to 1 m and a frequency of about 300 MHz to 30 GHz, and is preferably a microwave having a frequency approved for industrial, scientific, medical, household or similar applications, for example, a frequency of 915 MHz, 2.45 GHz, 5.8 GHz or 24.12 GHz.

Since the waveguide (not shown) is a common configuration used in a microwave generation apparatus in the corresponding technical field, the detailed description thereof will be omitted. Meanwhile, a controller (a control panel) may supply power to each of the microwave generators 310, 320, 330, and 340 to radiate microwaves to the slide reaction unit 200.

The raw material inlet unit (not shown) may be provided with a raw material inlet which injects the powder raw materials into the firing main body 100, and the raw material outlet unit (not shown) may be provided with a raw material outlet which discharges the powder raw materials discharged from the firing main body 100. It is obvious that the inlet and the outlet of the raw material inlet unit/outlet unit may be located on one side surfaces or at the inside of the firing main body 100, and may be further provided with connection tubes, supply screws, and the like connected to the firing main body 100.

Meanwhile, the raw material inlet unit/outlet unit and the one side surfaces or the inside of firing main body 100 remain apart from each other at set intervals. Accordingly, the microwaves radiated into the firing main body 100 may be prevented from being directly radiated to the raw material inlet unit/outlet unit. The raw material inlet unit/outlet unit may be prevented from being damaged or deformed. Specifically, a heat-resistant member (not shown) having heat resistance and a choke structure (not shown) for preventing microwave leakage may be further provided between the raw material inlet unit/outlet unit and the one side surfaces of the firing main body 100, and the raw material inlet unit/outlet unit may be prevented from being deformed by the microwaves.

The gas inlet unit and the gas outlet unit may be provided in communication with the firing main body 100 and may be respectively provided with the gas inlet and the gas outlet (not shown) which allow a gas to move. Here, the gas may react or not react with the powder raw material while being injected into the firing main body 100 through the gas inlet unit, and the gas discharged from the firing main body 100 may be recovered through the gas outlet unit.

Air, oxygen, and an inert gas may be injected into the firing main body 100 connected to the gas inlet unit/outlet unit. Accordingly, an internal pressure may be increased. Further, the firing main body 100 may be at a negative pressure because the air or gases therein are removed. In addition, the firing main body 100 may receive a refrigerant gas to cool the powder raw materials therein after a reaction is completed.

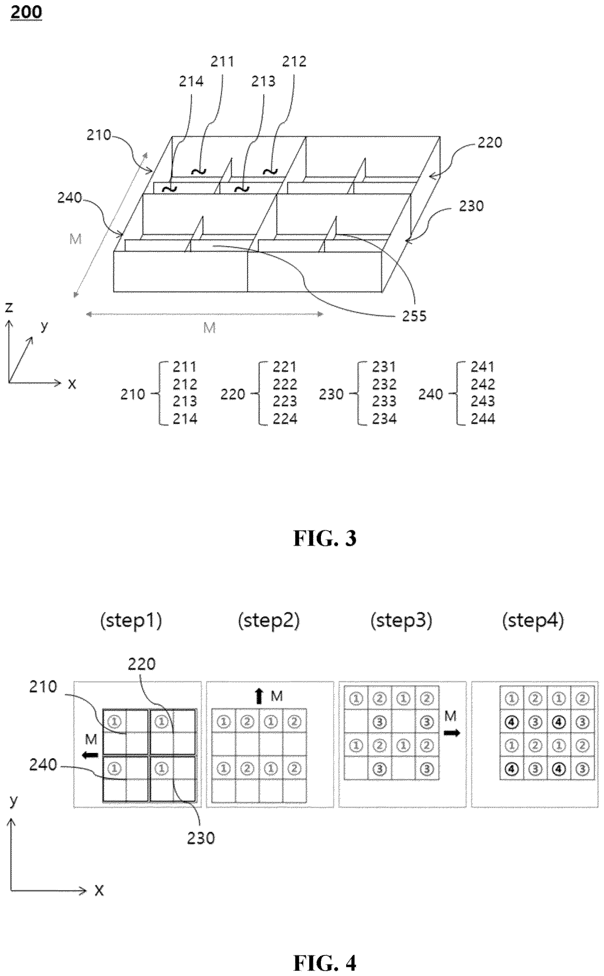

FIG. 4 is a schematic diagram illustrating an operating method of the microwave firing apparatus in FIG. 1. Here, FIG. 4 will be described with reference to FIG. 1.

Meanwhile, the following description of operations performed in a first reaction vessel 210 and individual auxiliary vessels (first to fourth auxiliary vessels) 211, 212, 213, and 214 included in the first reaction vessel 210 simultaneously applies to individual auxiliary vessels 221, 222, 223, and 224 included in a second reaction vessel 220, individual auxiliary vessels 231, 232, 233, and 234 included in a third reaction vessel 230, and individual auxiliary vessels 241, 242, 243, and 244 included in a fourth reaction vessel 240.

When the first microwave generator 310 is aligned in the vertical direction (the Z-axis) with the first auxiliary vessel 211 by a biaxial reciprocating linear motion of the slide reaction unit 200, the first microwave generator 310 may radiate microwaves to the first auxiliary vessel 211 to melt silicon-based particles on carbon-based particle surfaces among powder raw materials, and each of the second to fourth auxiliary vessels 212, 213, and 214 may independently cool internal powder raw materials to room temperature after internal firing to precipitate silicon-based nanoparticles on the carbon-based particle surfaces or may be in a reaction standby state before the microwaves are radiated (see FIG. 4, step 1).

Further, when the first microwave generator 310 is aligned in the vertical direction (the Z-axis) with the second auxiliary vessel 212 by the biaxial reciprocating linear motion of the slide reaction unit 200 (in a clockwise direction), the first microwave generator 310 may radiate microwaves to the second auxiliary vessel 212 to melt silicon-based particles on carbon-based particle surfaces among powder raw materials, the first auxiliary vessel 211 may cool internal powder raw materials fired by the microwaves to room temperature to precipitate silicon-based nanoparticles on the carbon-based particle surfaces, and each of the third and fourth auxiliary vessels 213 and 214 may independently be in a reaction standby state before the microwaves are radiated (see FIG. 4, step 2).

In addition, when the first microwave generator 310 is aligned in the vertical direction (the Z-axis) with the third auxiliary vessel 213 by the biaxial reciprocating linear motion of the slide reaction unit 200 (in the clockwise direction), the first microwave generator 310 may radiate microwaves to the third auxiliary vessel 213 to melt silicon-based particles on carbon-based particle surfaces among powder raw materials, each of the first and second auxiliary vessels 211 and 212 may independently cool internal powder raw materials fired by the microwaves to room temperature to precipitate silicon-based nanoparticles on the carbon-based particle surfaces, and the fourth auxiliary vessel 214 may be in a reaction standby state before the microwaves are radiated (see FIG. 4, step 3).

In addition, when the first microwave generator 310 is aligned in the vertical direction (the Z-axis) with the fourth auxiliary vessel 214 by the biaxial reciprocating linear motion of the slide reaction unit 200 (in the clockwise direction), the first microwave generator 310 may radiate microwaves to the fourth auxiliary vessel 214 to melt silicon-based particles on carbon-based particle surfaces among powder raw materials, each of the first to third auxiliary vessels 211, 212, and 213 may independently cool internal powder raw materials fired by the microwaves to room temperature to precipitate silicon-based nanoparticles on the carbon-based particle surfaces (see FIG. 4, step 4).

Subsequently, a Si/C composite particle negative electrode active material in which a silicon nanoparticle coating layer is formed on a natural graphite surface may be finally manufactured by performing a cooling process in a firing main body.

Hereinafter, the present disclosure will be described in detail through an example, but this is provided to describe the present disclosure in more detail, and the scope of the present disclosure is not limited to the example to be described below.

### Example 1

Natural graphite (D50: 15 µm) and a powder of plate-shaped silicon particles (D50: 400 nm) were put in a particle mixer at a weight ratio of 9:1 and mechanically stirred, and then 100 g of the mixture was charged into a slide reaction vessel (a crucible size of 80*80 mm). Next, all the natural graphite (carbon heating elements) accommodated in the crucible was heated by moving the slide reaction vessel along the X-Y axes so that the slide reaction vessels were entirely irradiated with microwaves. In this case, four magnetrons of 2,450 MHz and 3 kW were used to move the crucible in an X-Y axis clockwise direction (position order of ①->②->③->④ in FIG. 4) and the microwaves were radiated for 1 minute at each position. In this case, the heating elements were treated with the microwaves for 1 minute to be heated up to 1,400 °C, and then cooling at -5 °C/min was performed to finally manufacture a Si/C composite particle negative electrode active material formed with a silicon nanoparticle coating layer on the natural graphite surface.

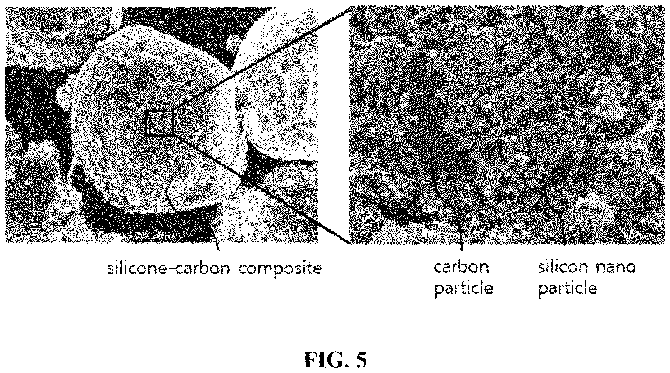

FIG. 5 is a scanning electron microscope (SEM) image of the silicon carbon composite (Si/C composite) synthesized in Example 1. Referring to FIG. 5, it can be seen that silicon nanoparticles were uniformly coated on the natural graphite surface in manufactured Si/C particles (see the enlarged image).

In the present disclosure, since all powder raw materials are heated with microwaves for the same time by a biaxial reciprocating linear motion of the slide reaction unit in a horizontal direction to perform sequential heating, silicon nanoparticles on the surfaces of the carbon-based materials can be uniformly formed by causing a uniform temperature increase on all surfaces of carbon-based materials (heating elements).

Further, in the present disclosure, since i) a plurality of reaction vessels in which individual reaction vessels are disposed in parallel in a biaxial reciprocating linear motion direction of the slide reaction unit are applied, and ii) all powder raw materials are sequentially heated with microwaves for the same time by the biaxial reciprocating linear motion of the slide reaction unit in the horizontal direction, silicon-carbon composite negative electrode materials can be mass-produced in a reaction unit with an increased volume while maintaining the radiation efficiency of the microwaves.

Although embodiments of the present disclosure have been described above, the present disclosure is not limited to the embodiments and may be manufactured in various different forms, and those skilled in the art may understand that the present disclosure may be implemented in other specific forms without departing from the claims. Accordingly, the above-described embodiments should be understood as being exemplary and not limiting.

## Claims

1. A microwave firing apparatus (10) comprising:
a firing main body (100);
a slide reaction unit (200) located in the firing main body (100) and configured to perform a biaxial reciprocating linear motion along two axes, namely an X-axis and a Y-axis, orthogonal to each other in a horizontal direction; and
a plurality of microwave generators (300; 310, 320, 330, 340) located on an upper and/or lower surface of the firing main body (100), and in which the individual microwave generators (310, 320, 330, 340) thereof are arranged in parallel to the biaxial linear motion direction of the slide reaction unit (200).

2. The microwave firing apparatus of claim 1, wherein the slide reaction unit (200) includes a plurality of reaction vessels (210, 220, 230, 240) in which the individual reaction vessels (210, 220, 230, 240) thereof are arranged in parallel to the biaxial reciprocating linear motion direction of the slide reaction unit (200).

3. The microwave firing apparatus of claim 2, wherein the individual reaction vessel (210, 220, 230, 240) is configured to receive powder raw materials including carbon-based particles and silicon-based particles in an internal accommodation space, is aligned in a vertical direction (Z-axis) with the individual microwave generator (310, 320, 330, 340) so that the powder raw materials charged into the individual reaction vessel are irradiated with microwaves, to precipitate the silicon-based particles on carbon-based particle surfaces heated by the radiated microwaves.

4. The microwave firing apparatus of claim 2 or 3, wherein:
the plurality of reaction vessels include first to fourth reaction vessels (210, 220, 230, 240); and
the individual reaction vessel (210, 220, 230, 240) is provided with a powder raw material accommodation space therein, and includes a separator (250) shielding its from a neighboring individual reaction vessel (210, 220, 230, 240) in a disposition direction of the first to fourth reaction vessels.

5. The microwave firing apparatus of one of claims 2 to 4, wherein the individual reaction vessel (210, 220, 230, 240) includes a plurality of auxiliary vessels (211, 212, 213, 214; 221, 222, 223, 224; 231, 232, 233, 234; 241, 242, 243, 244) in which individual auxiliary vessels are arranged in parallel to the biaxial reciprocating linear motion direction of the slide reaction unit (200).

6. The microwave firing apparatus of claim 5, wherein the individual auxiliary vessel is alignable in a vertical direction, a Z-axis, with one of the individual microwave generators so that the powder raw materials charged into the individual reaction vessel are irradiated with microwaves to melt the silicon-based particles on the carbon-based particle surfaces heated by the radiated microwaves, and is releasable from vertical alignment with said one of the individual microwave generators by the biaxial reciprocating linear motion of the slide reaction unit to cool the powder raw material in the individual auxiliary vessel to room temperature to precipitate the silicon-based nanoparticles on the carbon-based particle surfaces.

7. The microwave firing apparatus of claim 5, wherein:
the plurality of auxiliary vessels include first to fourth auxiliary vessels (211, 212, 213, 214; 221, 222, 223, 224; 231, 232, 233, 234; 241, 242, 243, 244) ; and
the individual auxiliary vessel is provided with a powder raw material accommodation space therein, and includes a separator (255) shielding it from a neighboring individual auxiliary vessel in a disposition direction of the first to fourth auxiliary vessels.

8. The microwave firing apparatus of one of claims 4 to 7, wherein the separator (250; 255) includes an insulating material, a microwave reflective material, or a combination thereof.

9. The microwave firing apparatus of claim 7, wherein, when the individual microwave generator is aligned in a vertical direction, a Z-axis, with the first auxiliary vessel by the biaxial reciprocating linear motion of the slide reaction unit (200):
that individual microwave generator radiates microwaves to the first auxiliary vessel to melt silicon-based particles on carbon-based particle surfaces among powder raw materials;
while each of the second to fourth auxiliary vessels independently is allowed to cool the internal powder raw materials fired by the microwaves to room temperature to precipitate silicon-based nanoparticles on the carbon-based particle surfaces or is in a reaction standby state before the microwaves are radiated.

10. The microwave firing apparatus of claim 2, wherein the plurality of microwave generators (310, 320, 330, 340) are respectively aligned in a vertical direction (a Z-axis) with the plurality of reaction vessels (210, 220, 230, 240) to radiate microwaves in the vertical direction.

11. The microwave firing apparatus of claim 4, wherein:
the plurality of microwave generators include first to fourth microwave generators (310, 320, 330, 340); and
the first to fourth microwave generators are respectively aligned in a vertical direction (a Z-axis) with the first to fourth reaction vessels (210, 220, 230, 240) to radiate microwaves in the vertical direction.

12. The microwave firing apparatus of one of claims 1 to 13, wherein the individual microwave generator (310, 320, 330, 340) includes a microwave generation device configured to radiate microwaves, and further includes a waveguide configured to guide the radiated microwaves in a vertical direction toward the slide reaction unit (200).

13. The microwave firing apparatus of one of claims 1 to 12, wherein the firing main body (100) further includes a gas inlet unit and a gas outlet unit connected to the firing main body and configured to allow a gas to move.

14. The microwave firing apparatus of claim 13, wherein the gas is air, oxygen, an inert gas, or a combination thereof.
